(19) Europäisches Patentamt
European Patent Office
Office européen des brevets

(11) **EP 4 693 172 A1**

(12) **EUROPEAN PATENT APPLICATION**
published in accordance with Art. 153(4) EPC

(43) Date of publication:
**11.02.2026  Bulletin 2026/07**

(21) Application number: **23930156.7**

(22) Date of filing: **29.12.2023**

(51) International Patent Classification (IPC):
***G06T 7/00*** (2017.01)

(52) Cooperative Patent Classification (CPC):
**G06T 5/40; G06T 7/00; G06T 7/11**

(86) International application number:
**PCT/CN2023/143354**

(87) International publication number:
**WO 2024/198594 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2023  CN 202310324018**

(71) Applicant: **Zhejiang Uniview Technologies Co.,
Ltd.**
**Hangzhou, Zhejiang 310051 (CN)**

(72) Inventor: **WU, Po**
**Hangzhou, Zhejiang 310051 (CN)**

(74) Representative: **De Ros, Alberto et al
Società Italiana Brevetti S.p.A.
Via G. Carducci 8
20123 Milano (IT)**

(54) **IMAGE PROCESSING METHOD AND APPARATUS, ELECTRONIC DEVICE, AND STORAGE MEDIUM**

(57)     The present disclosure provides an image processing method and apparatus, an electronic device, and a storage medium pertaining to the technical field of image processing. The image processing method comprises: determining a source grayscale histogram of a to-be-processed infrared image; on the basis of the source grayscale histogram, segmenting an input grayscale range and an output grayscale range to obtain at least two input grayscale sub-ranges and an output grayscale sub-range corresponding to each input grayscale sub-range; performing histogram equalization processing on the source grayscale histogram to obtain a target grayscale histogram, and on the basis of the target grayscale histogram, determining a mapping relationship between each input grayscale sub-range and the corresponding output grayscale sub-range to obtain a segmented grayscale mapping curve; and on the basis of the segmented grayscale mapping curve, performing grayscale mapping on the to-be-processed infrared image to obtain a contrast-enhanced image of the to-be-processed infrared image.

Acquire an infrared image to be processed and determine a source gray-level histogram of the infrared image to be processed — 110

Segment an input grayscale interval and an output grayscale interval of gray-level mapping based on the source gray-level histogram, to obtain at least two input grayscale subintervals and an output grayscale subinterval corresponding to each of the input grayscale subintervals — 120

Perform histogram equalization on the source gray-level histogram to obtain the target gray-level histogram — 130

Determine a mapping relationship between each of the input grayscale subintervals and the corresponding output grayscale subinterval based on the target gray-level histogram, to obtain a segmented gray-level mapping curve — 140

Perform gray-level mapping on the infrared image to be processed based on the segmented gray-level mapping curve, to obtain a contrast-enhanced image of the infrared image to be processed — 150

FIG. 1

**Description**

CROSS-REFERENCES TO RELATED APPLICATIONS

The present application claims priority to the Chinese patent application No. 202310324018.6 filed on March 24, 2023, entitled "Image processing method and apparatus, electronic device, and storage medium", which is incorporated herein by reference in its entirety.

FIELD

The present application relates to the field of image processing, and in particular to an image processing method and apparatus, an electronic device, and a storage medium.

BACKGROUND

A thermal infrared camera is a device that may visualize the infrared radiation emitted by the object being measured. By generating infrared images, it intuitively reflects the temperature field distribution on the surface of the object being measured. It has a wide range of applications in security monitoring, fire protection, and other fields.

In the monitored environment, the temperature difference range on the surface of the object being measured is small, which results in a small dynamic range and low contrast in the raw image data output by the thermal infrared camera, affecting the readability of the infrared image. Contrast enhancement may be used to address this issue in the infrared image visualization process. Contrast enhancement may be achieved based on image gray-level mapping, which may include function transformation-based gray-level mapping and histogram-based gray-level mapping.

In the histogram-based gray-level mapping, the output grayscale is a linear mapping of the cumulative distribution function (CDF) of the input grayscale. A gray-level mapping curve is generated based on the source gray-level histogram of infrared images or based on the target gray-level histogram after equalization of the source gray-level histogram, and the gray-level mapping is performed based on the gray-level mapping curve.

BRIEF SUMMARY

The present application provides an image processing method and apparatus, an electronic device, and a storage medium, to solve the problem of brightness fluctuations in the output image caused by using a target gray-level histogram after equalization for image gray-level mapping in the prior art.

There is provided an image processing method according to the present application, including:

acquiring an infrared image to be processed and determining a source gray-level histogram of the infrared image to be processed;

segmenting an input grayscale interval and an output grayscale interval of gray-level mapping based on the source gray-level histogram to obtain at least two input grayscale subintervals and an output grayscale subinterval corresponding to each of the input grayscale subintervals;

performing histogram equalization on the source gray-level histogram to obtain a target gray-level histogram, determining a mapping relationship between each of the input grayscale subintervals and the corresponding output grayscale subinterval based on the target gray-level histogram, to obtain a segmented gray-level mapping curve; and

performing gray-level mapping on the infrared image to be processed based on the segmented gray-level mapping curve, to obtain a contrast-enhanced image of the infrared image to be processed.

There is also provided an image processing apparatus according to the present application, including:

an acquisition module, configured to acquire an infrared image to be processed;

a first determination module, configured to determine a source gray-level histogram of the infrared image to be processed;

a segmentation module, configured to segment an input grayscale interval and an output grayscale interval of gray-level mapping based on the source gray-level histogram, to obtain at least two input grayscale subintervals and an output grayscale subinterval corresponding to each of the input grayscale subintervals;

an equalization module, configured to perform histogram equalization on the source gray-level histogram and obtain a target gray-level histogram;

a second determination module, configured to determine a mapping relationship between each of the input grayscale subintervals and the corresponding output grayscale subinterval based on the target gray-level histogram, and obtain a segmented gray-level mapping curve; and

a mapping module, configured to perform gray-level mapping on the infrared image to be processed based on the segmented gray-level mapping curve, and obtain a contrast-enhanced image of the infrared image to be processed.

There is also provided an electronic device according to the present application, including a memory, a processor, and a stored in the memory and executable in the processor, and the processor implements any of the image processing methods described above when executing the computer program.

There is also provided a computer-readable storage medium according to the present application storing a computer program, and the computer program implements any of the image processing methods described above when executed by a processor.

There is also provided a computer program product according to the present application including a computer program, and the computer program implements any of the image processing methods described above when executed by a processor.

BRIEF DESCRIPTION OF THE DRAWINGS

FIG. 1 is a first flowchart of an image processing method according to an embodiment of the present application;

FIG. 2 is a schematic diagram of a principle of an image processing method according to an embodiment of the present application;

FIG. 3 is a second flowchart of an image processing method according to an embodiment of the present application;

FIG. 4 is a schematic diagram of a principle of performing histogram equalization on a source gray-level histogram using an ADPHE algorithm to obtain a target gray-level histogram according to an embodiment of the present application;

FIG. 5a is a schematic diagram of a contrast enhancement effect of a pure road scene using an ADPHE algorithm according to an embodiment of the present application;

FIG. 5b is a schematic diagram of a contrast enhancement effect of a pure road scene using an image processing method provided by the present application, according to an embodiment of the present application;

FIG. 6a is a schematic diagram of a contrast enhancement effect of a large-area high-temperature target scene using an ADPHE algorithm according to an embodiment of the present application;

FIG. 6b is a schematic diagram of a contrast enhancement effect of a large-area high-temperature target scene using an image processing method provided by the present application, according to an embodiment of the present application;

FIG. 6c is a schematic diagram of a contrast enhancement effect of a large-area low-temperature background scene using an ADPHE algorithm according to an embodiment of the present application;

FIG. 6d is a schematic diagram of a contrast enhancement effect of a large-area low-temperature background scene using an image processing method provided by the present application according to an embodiment of the present application;

FIG. 7 is a schematic structural diagram of an image processing apparatus according to an embodiment of the present application; and

FIG. 8 is a schematic structural diagram of an electronic device according to an embodiment of the present application.

DETAILED DESCRIPTION

The solutions in the present application will be described below in conjunction with the accompanying drawings in the present application. The described embodiments are only part of the embodiments of the present application, but not all of the embodiments.

It should be noted that the terms "first", "second", "target", and the like in the specification and claims of the present application as well as the accompanying drawings, are used to distinguish similar objects, and are not necessarily used to describe a specific order or sequence. It should be understood that the data used in this way may be interchanged where appropriate, so that the embodiments of the present application described herein may be implemented in an order other than those illustrated or described herein. In addition, the terms "include" and "have", as well as any variations thereof, are intended to cover non-exclusive inclusions. For example, a process, a method, a system, a product or a device that includes a series of steps or units is not necessarily limited to those steps or units clearly listed, but may include other steps or units that are not clearly listed or inherent to these processes, methods, products or devices.

The terms used in the embodiments of the present application are explained as follows:

a gray-level histogram is a statistical histogram that shows the frequency of each gray level in a gray-level image;

histogram equalization is used to adjust the gray-level histogram of an image to a uniform distribution, thereby enhancing image contrast.

Image contrast enhancement may be achieved based on image gray-level mapping, which may include function transformation-based gray-level mapping and histogram-based gray-level mapping. The function transformation-based gray-level mapping may include a linear function transformation, a power function transformation, a logarithmic function transformation and the like. In the histogram-based gray-level mapping, the histogram equalization (HE) algorithm may be used to adjust the source gray-level histogram of the image to a uniform distribution, increasing the information entropy of the gray-level distribution, thus enhancing image contrast. However, the HE completely ignores the inherent characteristics of gray-level distribution in the original image, it is prone to introducing problems such as excessive background stretching and loss of image details. To address this issue, a series of improved HE algorithms have been proposed, such as the adaptive histogram equalization (AHE) algorithm, the contrast limited adaptive histogram equalization (CLAHE) algorithm, and the adaptive double plateau histogram equalization (ADPHE) algorithm.

In the histogram-based gray-level mapping, the output grayscale is a linear mapping of the cumulative distribution function (CDF) of the input grayscale. The CDF is the cumulative value of the probability density function (PDF) of the input grayscale. The physical meaning of CDF is the position of the current gray value in the gray values of all pixels in the ascending order. Based on this, the gray-level mapping is to sort the gray values of all pixels in the ascending order, and then reconstruct the mapped gray value according to the position of the gray value of the current pixel. The expression for generating a gray-level mapping curve based on CDF may be expressed as formula (1),

$$y(k) = \frac{\mathrm{CDF}(k)}{\mathrm{CDF}(K)} \cdot K, \ k \in \left[0, \ K\right] \qquad (1),$$

where $K = 2^N - 1$, which indicates the maximum gray value at the bit depth N in the current image data; CDF() represents the cumulative distribution function. In the histogram-based gray-level mapping, the PDF of the input grayscale may be equivalently replaced by the source gray-level histogram of the image or the target gray-level histogram generated by histogram equalization of the source gray-level histogram using any HE algorithms.

It was found from experiments that the average brightness and median brightness of the image are relatively stable in a case that a gray-level mapping curve is generated using the source gray-level histogram of the input image. The average brightness of the image fluctuates greatly in a case that a gray-level mapping curve is generated using the target gray-level histogram. The reason is that the source gray-level histogram of the input image is obtained by performing gray- level statistics on the input image, which directly reflects the real gray-level distribution of the input image. The target gray- level histogram generated based on the HE algorithm is an "ideal distribution" generated by increasing the information entropy of the gray-level by interfering with the source gray-level histogram, and cannot reflect the real gray-level distribution of the input image. In an embodiment of the present application, the phenomenon where the target gray-level histogram generated based on the HE algorithm deviates from the real gray-level distribution of the input image may be referred to as histogram distortion. The cumulative distribution value in the distorted target gray-level histogram may not accurately represent the position of the input gray value of gray values of all pixels in the ascending order, resulting in a significant shift in the average brightness of the image.

In a case where the image content monitored by a thermal infrared camera is a small-temperature-difference scene, such as the monitored image content is an object made of the same material, due to the very small or even no temperature difference on the surface of the object, when using the target gray-level histogram generated based on the HE algorithm to generate the gray-level mapping curve, it is prone to be subjected to excessive stretching and cannot fully adapt to complex and changing monitoring environments. Moreover, in different application scenarios, the brightness difference of the output image is also significant. For example, in an application scenario where the thermal infrared camera is stationary, the captured scene is usually static. If an object with high temperature enters the low-temperature background, the brightness of the image fluctuates significantly, reducing the temporal continuity of the video image and affecting the visual quality. In an application scenario where the thermal infrared camera is a PTZ camera, a tripod head of the PTZ camera may move in all directions, which may cause the monitoring scene to change constantly. At this time, the brightness difference of the output image may also degrade video quality. In these scenarios, histogram distortion occurs when using the target gray-level histogram generated based on the HE algorithm to generate the gray-level mapping curve, resulting in large fluctuations in image brightness and poor video continuity.

Based on this, there is provided an image processing method according to the present application. The method includes the following steps: segmenting an input grayscale interval and an output grayscale interval of gray-level mapping based on the source gray-level histogram of an infrared image to be processed to obtain at least two input grayscale subintervals and an output grayscale subinterval corresponding to each of the input grayscale subintervals; then performing histogram equalization on the source gray-level histogram to obtain a target gray-level histogram, determining a mapping relationship between each of the input grayscale subintervals and the corresponding output grayscale subinterval, to obtain a segmented gray-level mapping curve; and performing gray-level mapping on the infrared image to be processed based on the segmented gray-level mapping curve, to obtain a contrast-enhanced image of the infrared image to be processed. In the process of gray-level mapping using the target gray-level histogram after histogram equalization, the gray-level mapping range of the target gray-level histogram is segmentally constrained using the source gray-level histogram, which may reflect the real gray-level distribution information of the infrared image to be processed. The information of the source gray-level histogram of the infrared image to be processed is incorporated into the gray-level mapping process to suppress the brightness fluctuation of the output image caused by histogram distortion, which helps to improve the temporal continuity of infrared video images in video surveillance.

On the other hand, the image processing method provided in an embodiment of the present application may also determine small-temperature-difference scenes based on the gray-level distribution of the infrared image to be processed, and limit the contrast stretching range of small-temperature-difference scenes to avoid excessive background stretching.

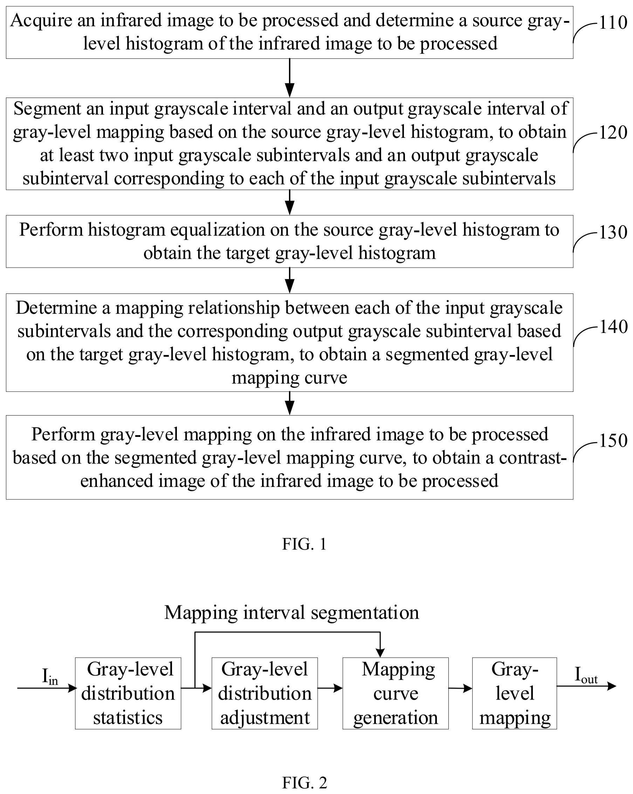

The image processing method disclosed in the present application will be described below in conjunction with FIGS. 1 to 6. This image processing method may be applied to an electronic device such as a thermal infrared camera, a server connected to the thermal infrared camera, a mobile phone, or a computer. The servers may include an independent server, a cluster server, or a cloud server. The image processing method may also be applied to image processing devices installed in a thermal infrared camera or an electronic device such as a server, a mobile phone, and a computer that are in communication with a thermal infrared camera. The image processing device may be implemented through software, hardware, or a combination of both.

FIG. 1 exemplarily illustrates a first flowchart of an image processing method according to an embodiment of the present application. Referring to FIG. 1, the image processing method may include the following steps 110 to 150.

At step 110, acquire an infrared image to be processed and determine a source gray-level histogram of the infrared image to be processed.

A thermal infrared camera may capture infrared images of the monitored area and obtain the infrared images to be processed. A thermal infrared camera, or an electronic device such as a server, a mobile phone, and a computer that connected to the thermal infrared camera, may perform gray-level statistics on each pixel of the infrared image to be processed, and generate a source gray-level histogram. The source gray-level histogram is the original gray-level histogram of the infrared image to be processed, and may reflect the real gray-level distribution information of the infrared image to be processed.

At step 120, segment an input grayscale interval and an output grayscale interval of gray-level mapping based on the source gray-level histogram, and obtain at least two input grayscale subintervals and an output grayscale subinterval corresponding to each of the input grayscale subintervals.

Assuming the bit depth in the image data is N bits, the maximum gray value that may be represented at this bit depth is $K=2^N-1$. The maximum gray value that may be represented in the source gray-level histogram generated by gray-level statistics for each pixel of the infrared image to be processed is K, which is also the maximum gray-level of the source gray-level histogram. Therefore, the source gray-level histogram may display the gray value $k=\{0, 1,..., K\}$, with a total of K+1 different gray values. For example, assuming N=14, the source gray-level histogram may display the frequency of 16384 different gray values. Based on this, the input grayscale interval for gray-level mapping may be determined as [0, K].

The output grayscale interval may be [0, K] or determined based on the monitoring scene of the infrared image to be processed. For example, in small-temperature-difference scenarios, the output grayscale interval may be determined based on the gray-level distribution of the source gray-level histogram. For example, the range of the output grayscale interval may be limited based on the maximum valid gray value and the minimum valid gray value in the source gray-level histogram to avoid excessive background stretching. In an embodiment, the valid gray value is a gray value with a statistical value greater than 0 in the source gray-level histogram.

Based on the gray-level distribution information of the source gray-level histogram, the input grayscale interval and output grayscale interval may be segmented into such as 2, 3, or 4 segments. During the segmentation process, the gray value of the corresponding segmentation points for segmenting the output grayscale interval may be determined based on the gray values of the segmentation points for segmenting the input grayscale interval, thereby obtaining at least two input grayscale subintervals and an output grayscale subinterval corresponding to each of the input grayscale subintervals.

For example, the median gray value may be determined based on the cumulative distribution function value of the source gray-level histogram, and the input grayscale interval may be segmented using the median gray value as the gray value of the segmentation point. The corresponding gray value of the segmentation point for segmenting the output grayscale interval is determined based on the cumulative distribution function value corresponding to the median gray value and the maximum gray value K, and this gray value of the segmentation point is used for segmenting the output grayscale interval.

At step 130, perform histogram equalization on the source gray-level histogram and obtain the target gray-level histogram.

The source gray-level histogram may be subjected to histogram equalization based on but not limited to histogram equalization algorithms such as HE, AHE, CLAHE, or ADPHE to obtain the target gray-level histogram.

At step 140, determine a mapping relationship between each of the input grayscale subintervals and the corresponding output grayscale subinterval based on the target gray-level histogram, and obtain a segmented gray-level mapping curve.

For each of the input grayscale subinterval and the corresponding output grayscale subinterval, the gray values of the input grayscale subinterval may be mapped to the corresponding output grayscale subinterval based on the cumulative distribution function of the target gray-level histogram, resulting in a segmented gray-level mapping curve. In this way, the gray-level mapping from each of the input grayscale subinterval to the corresponding output grayscale subinterval has a corresponding gray-level mapping curve, which may limit the brightness fluctuations of the contrast-enhanced image.

At step 150, perform gray-level mapping on the infrared image to be processed based on the segmented gray-level mapping curve, and obtain a contrast-enhanced image of the infrared image to be processed.

For example, after obtaining the segmented gray-level mapping curve, for the gray value of each pixel in the infrared image to be processed, the input grayscale subinterval to which the gray value belongs may be determined. Using the segmented gray-level mapping curve corresponding to the input grayscale subinterval, the target gray value of the gray value after gray-level mapping may be calculated, thereby achieving gray-level mapping of the infrared image to be processed and obtaining a contrast-enhanced image of the infrared image to be processed.

For example, after obtaining the segmented gray-level mapping curve, a gray-level mapping lookup table corresponding to the input grayscale interval may be generated based on the segmented gray-level mapping curve. Based on the gray value of each pixel in the infrared image to be processed, the target gray value corresponding to the gray value of each pixel may be acquired from the gray-level mapping lookup table, and then a contrast-enhanced image may be generated based on the target gray value. The gray-level mapping lookup table may store the correspondence between each gray value in the input grayscale interval and the target gray value after gray-level mapping. In this way, for pixels with the same gray value in the infrared image to be processed, the target gray value only needs to be calculated once to obtain the target gray values of all these pixels by looking up the table, without having to calculate the target gray value for each pixel using the segmented mapping curve, thereby improving the efficiency of gray-level mapping.

There is provided an image processing method according to the present application, in which an input grayscale interval and an output grayscale interval of gray-level mapping may be segmented based on the source gray-level histogram of an infrared image to be processed, and at least two input grayscale subintervals and an output grayscale subinterval corresponding to each of the input grayscale subintervals are obtained. Then, histogram equalization on the source gray-level histogram is performed, a target gray-level histogram is obtained, a mapping relationship between each of the input grayscale subintervals and the corresponding output grayscale subinterval is determined, and a segmented gray-level mapping curve is obtained. Gray-level mapping on the infrared image to be processed is performed based on the segmented gray-level mapping curve, and a contrast-enhanced image of the infrared image to be processed is obtained. Image contrast enhancement may be achieved based on image gray-level mapping. In the process of gray-level mapping using the target gray-level histogram after histogram equalization, the gray-level mapping range of the target gray-level histogram is segmentally constrained using the source gray-level histogram that may reflect the real gray-level distribution information of the infrared image to be processed. The information of the source gray-level histogram of the infrared image to be processed is incorporated into the gray-level mapping process to suppress the brightness fluctuation of the output image caused by histogram distortion, which helps to improve the temporal continuity of infrared video images in video surveillance.

There is provided an image processing method according to an embodiment corresponding to FIG. 1. In an exemplary embodiment, the steps of segmenting the input grayscale interval and the output grayscale interval of the gray-level mapping based on the source gray-level histogram, to obtain the at least two input grayscale subintervals and the output grayscale subinterval corresponding to each of the input grayscale subintervals may include determining at least one input gray-level segmentation point and a target mapping gray value corresponding to each of the input gray-level segmentation points based on the source gray-level histogram; segmenting the input grayscale interval based on the input gray-level segmentation point to obtain at least two input grayscale subintervals; and segmenting the output grayscale interval based on the target mapping gray value to obtain the output grayscale subinterval corresponding to each of the input grayscale subintervals.

In this way, based on the input gray-level segmentation points used to segment the input grayscale interval, the corresponding segmentation points for segmenting the output grayscale interval may be determined, so that after the input grayscale interval and output grayscale interval are segmented, each of the input grayscale subintervals obtained from segmentation has its corresponding output grayscale subinterval. Based on this, the segmented gray-level mapping curve for each of the input grayscale subintervals mapped to its corresponding output grayscale subinterval may be determined, ensuring that gray-level reconstruction may be performed based on the positions where the gray values are sorted in ascending order after gray-level mapping.

In an exemplary embodiment, the steps of determining the at least one input gray-level segmentation point and the target mapping gray value corresponding to each of the input gray-level segmentation points based on the source gray-level histogram may include determining a cumulative distribution function value of each gray-level in the source gray-level histogram; determining at least one input gray-level segmentation point based on the cumulative distribution function value and a resolution of the infrared image to be processed; and for each of the input gray-level segmentation points, determining the target mapping gray value corresponding to each of the input gray-level segmentation points based on the cumulative distribution function value of the gray-level where each of the input gray-level segmentation points is located and the maximum gray value of the source gray-level histogram.

For example, assuming that the gray-level of the source gray-level histogram $H_{src}$ of the infrared image to be processed is between 0 and K, the source gray-level histogram may be represented as $H_{src} = \{h_s(0), h_s(1), \ldots, h_s(K)\}$, where $h_s$ represents the statistical value of each gray-level in the source gray-level histogram. The cumulative distribution function value of each gray-level in the source gray-level histogram $H_{src}$ may be determined according to the following formula (2),

$$F_s(k) = \sum_{i=0}^{k} h_s(i) \qquad (2),$$

where k={0, 1, ..., K}, which represents the gray-level, and $F_s(k)$ represents the cumulative distribution function value of the kth gray-level.

Assuming that the input grayscale interval is divided into m (m $\geq$ 2) segments, the number of input gray-level segmentation points is m-1. The input gray-level segmentation points may be determined according to the following formula (3),

$$k_j = \min_{k} \left\{ k \mid F_s(k) \geq \frac{j}{m} \cdot W \cdot H \right\} \qquad (3),$$

where j={1, 2,... , m-1}, where $k_j$ represents the jth input gray-level segmentation point, W indicates the number of pixels in the horizontal direction of the infrared image to be processed, and H represents the number of pixels in the vertical direction of the infrared image to be processed.

For each input gray-level segmentation point $k_j$, formula (2) may be combined to determine the target mapping gray value corresponding to each input gray-level segmentation point according to the following formula (4),

$$y_j = \frac{F_s(k_j)}{F_s(K)} \cdot K \qquad (4),$$

where $y_j$ represents the target mapping gray value corresponding to the jth input gray-level segmentation point $k_j$, and K is the maximum gray value of the source gray-level histogram $H_{src}$. The target mapping gray value determined based on the input gray-level segmentation point is also m-1. Using the target mapping gray value as the segmentation point for the output grayscale interval, the output grayscale interval may be divided into m segments.

In this way, the segmented input grayscale subinterval $[k_{j-1}, k_j)$ may correspond to the output grayscale subinterval $[y_{j-1}, y_j)$, and its corresponding segmented gray-level mapping curve may be used to map the input grayscale subinterval $[k_{j-1}, k_j)$ to the output grayscale subinterval $[y_{j-1}, y_j)$.

There is provided an image processing method according to an embodiment corresponding to FIG. 1. In an exemplary embodiment, the steps of determining the mapping relationship between each of the input grayscale subintervals and the corresponding output grayscale subinterval based on the target gray-level histogram, to obtain the segmented gray-level mapping curve may include determining a cumulative distribution function of the target gray-level histogram; and for each of the input grayscale subintervals and the output grayscale subinterval corresponding to each of the input grayscale subintervals, determining the mapping relationship between the input grayscale subinterval and the output grayscale subinterval based on a first interval endpoint of each of the input grayscale subintervals, a second interval endpoint of the corresponding output grayscale subinterval, and the cumulative distribution function of the target gray-level histogram, to obtain the segmented gray-level mapping curve.

For example, assuming that the source gray-level histogram $H_{src}$ is subjected to histogram equalization, the resulting target gray-level histogram is $H_{dst}=\{h_d(0), h_d(1), \dots, h_d(K)\}$, where $h_d$ represents the statistical value of each gray-level in the target gray-level histogram. The cumulative distribution function $F_d(k)$ of $H_{dst}$ may be expressed as the following formula (5),

$$F_d(k) = \sum_{i=0}^{k} h_d(i) \qquad (5),$$

where $k=\{0, 1, \dots, K\}$, which represents the gray-level.

For the input grayscale subinterval $[k_{j-1}, k_j)$ and its corresponding output grayscale subinterval $[y_{j-1}, y_j)$, the mapping relationship between the input grayscale subinterval $[k_{j-1}, k_j]$ and the output grayscale subinterval $[y_{j-1}, y_j]$ may be established based on the interval endpoints $k_{j-1}$ and $k_j$ of the input grayscale subinterval $[k_{j-1}, k_j]$, the interval endpoints $y_{j-1}$ and $y_j$ of the output grayscale subinterval $[y_{j-1}, y_j]$, and the cumulative distribution function of formula (5) using the following formula (6):

$$y(k) = \frac{y_j - y_{j-1}}{F_d(k_j) - F_d(k_{j-1})} \cdot F_d(k) + \frac{F_d(k_j) \cdot y_{j-1} - F_d(k_{j-1}) \cdot y_j}{F_d(k_j) - F_d(k_{j-1})}, \quad k \in [k_{j-1}, k_j) \qquad (6).$$

In this way, the mapping relationship between each of the segmented input grayscale subintervals and its corresponding output grayscale subinterval may be determined according to the formula (6), and the segmented gray-level mapping curve of each interval segment may be obtained. It may be understood that formula (6) is the segmented gray-level mapping curve for each interval segment.

Based on the image processing method of the above embodiment, in an exemplary embodiment, for the case where the infrared image to be processed is a small-temperature-difference scene image, the output grayscale interval may be restricted according to the distribution of the source gray-level histogram of the infrared image to be processed. For example, the input gray-level segmentation points determined based on the cumulative distribution function value of each gray-level in the source gray-level histogram of the infrared image to be processed, and a resolution of the infrared image to be processed may include a median gray value. In an embodiment, the image processing method may also include determining the output grayscale interval based on the median gray value, the target mapping gray value corresponding to the median gray value, a maximum valid gray value, and a minimum valid gray value in a case where the infrared image to be processed is a small-temperature-difference scene image; in which the valid gray value is a gray value with a statistical value greater than 0 in the source gray-level histogram.

In an embodiment, when dividing the input grayscale interval into two input grayscale subintervals with the median gray value as the input gray-level segmentation point, the number of pixels in the two segmented input grayscale subintervals is equal or approximately equal. By combining the above formula (3) and taking m=2, j=1, the median gray value may be determined according to the formula (3). Based on the median gray value, the target mapping gray value corresponding to the median gray value may be determined according to the formula (4).

In an embodiment, the maximum valid gray value is the maximum gray value among the gray values corresponding to the non-zero statistical value in the source gray-level histogram, and the minimum valid gray value is the minimum gray value among the gray values corresponding to the non-zero statistical value in the source gray-level histogram.

For example, the minimum value $y_{min}$ of the output grayscale interval may be determined according to the following formula (7), and the maximum value $y_{max}$ of the output grayscale interval may be determined according to the following formula (8):

$$y_{min} = y_{\text{ref}} - (k_{\text{med}} - k_{\text{min}}) \cdot 2^{N-8} \qquad (7)$$

and,

$$y_{min} = y_{\text{ref}} + (k_{\text{max}} - k_{\text{med}}) \cdot 2^{N-8} \qquad (8),$$

where $k_{\text{med}}$ represents the median gray value, $y_{\text{ref}}$ represents the target mapping gray value corresponding to the median gray value, $k_{\text{max}}$ represents the maximum valid gray value, $k_{\text{min}}$ represents the minimum valid gray value, and N represents the bit depth of the image data.

In this way, for the case where the infrared image to be processed is a small-temperature-difference scene image, by using the distribution of the source gray-level histogram of the infrared image to restrict the output grayscale interval, it is possible to preserve the temperature difference information while avoiding excessive contrast stretching.

In an exemplary embodiment, the image processing method may further include: determining that the infrared image to be processed is a small-temperature-difference scene image in a case where a number of valid gray values in the source gray-level histogram is less than or equal to a first threshold, or in a case where a grayscale dynamic range of the infrared image to be processed is less than or equal to a second threshold; in which the grayscale dynamic range is determined based on the maximum valid gray value and the minimum valid gray value. For example, the difference between the maximum valid gray value and the minimum valid gray value may be determined as the grayscale dynamic range.

According to the image processing methods of the different embodiments described above, FIG. 2 exemplarily illustrates a schematic diagram of the principle of an image processing method according to an embodiment of the present application. Referring to FIG. 2, the gray-level distribution statistics of the infrared image to be processed $I_{\text{in}}$ may be performed to obtain the source gray-level histogram. The source gray-level histogram may be adjusted by the histogram equalization algorithm to obtain the target gray-level histogram. At the same time, the mapping interval segmentation is performed based on the source gray-level histogram; that is, the input grayscale interval and output grayscale interval of the gray-level mapping are segmented. The mapping relationship between each of the input grayscale subintervals obtained by segmentation and the corresponding output grayscale subinterval is determined based on the target gray-level histogram, and a segmented gray-level mapping curve is obtained. According to the segmented gray-level mapping curve, the gray-level mapping is performed for the infrared image to be processed $I_{\text{in}}$ and a contrast-enhanced image $I_{\text{out}}$ is generated.

The image processing method provided by the embodiment of the present application is illustrated below by taking the case where the resolution of the infrared image to be processed is W × H, the bit depth of the image data is N bits, and the input grayscale interval and output grayscale interval are segmented into 2 subintervals.

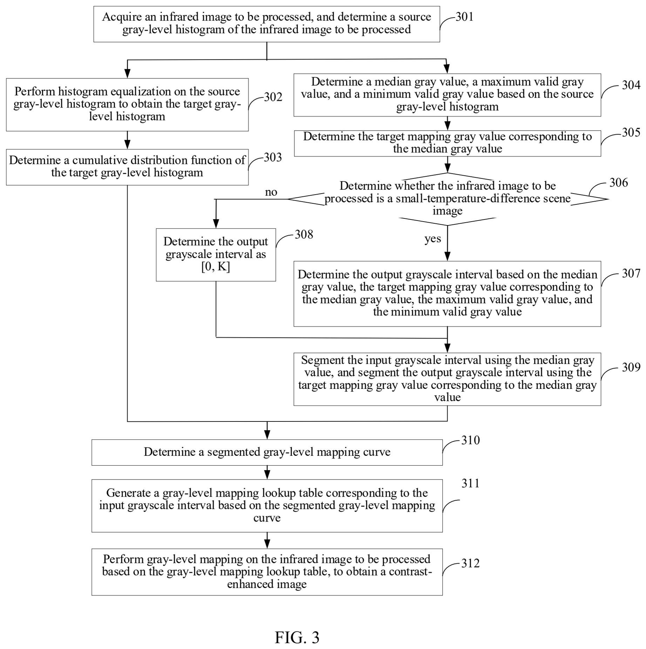

FIG. 3 exemplarily illustrates a second flowchart of an image processing method according to an embodiment of the present application. Referring to FIG. 3, the image processing method may include the following steps 301 to 312.

At step 301, acquire an infrared image to be processed and determine a source gray-level histogram of the infrared image to be processed.

A thermal infrared camera may capture infrared images of the monitored area and obtain the infrared image to be processed. A thermal infrared camera, or an electronic device such as a server, a mobile phone, or a computer that is connected to the thermal infrared camera, may acquire the infrared image to be processed and determine the source gray-level histogram of the infrared image to be processed.

In the exemplary embodiment, if the bit depth of the image data is N bits, the maximum gray value may be $K = 2^N - 1$, which may include the gray values $k = \{0, 1, ... , K\}$, with a total of K+1 different gray values. Traverse each pixel of the infrared image to be processed, perform grayscale statistics, and obtain the source gray-level histogram $H_{\text{src}} = \{h_s(0), h_s(1), ... , h_s(K)\}$ of the infrared image to be processed.

For example, before determining the source gray-level histogram of the infrared image to be processed, preprocessing may be performed on the infrared image to be processed. This preprocessing may include at least one of non-uniformity correction, bad pixel correction, and stripe noise correction, but is not limited thereto. Then, grayscale statistics on the preprocessed infrared image to be processed is performed to generate the source gray-level histogram of the infrared image to be processed.

After obtaining the source gray-level histogram, steps 302 and 304 may be performed respectively.

At step 302, perform histogram equalization on the source gray-level histogram and obtain the target gray-level histogram.

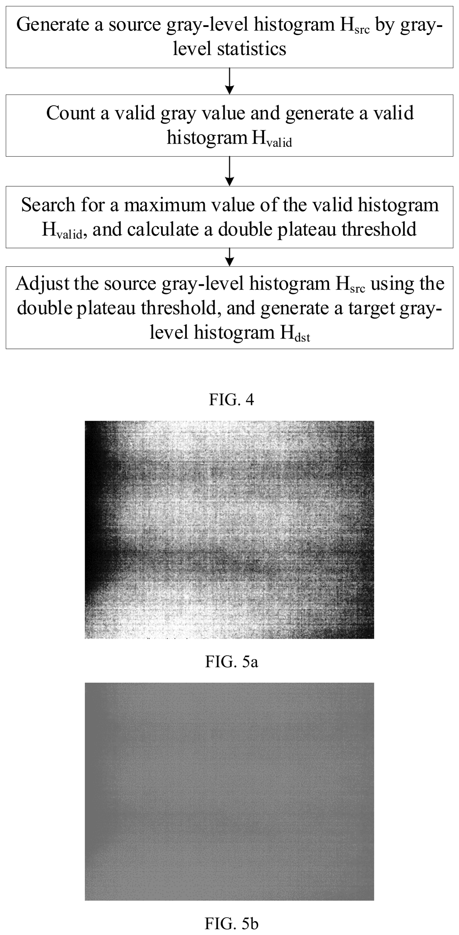

After obtaining the source gray-level histogram of the infrared image to be processed, the histogram equalization algorithm may be used to adjust the distribution of the source gray-level histogram $H_{\text{src}}$ and obtain the target gray-level histogram $H_{\text{dst}}$. In an embodiment, histogram equalization algorithms may include but are not limited to HE, AHE, CLAHE, ADPHE, and the like. For example, taking the ADPHE algorithm as an example, FIG. 4 illustrates a schematic diagram of the principle of performing histogram equalization on a source gray-level histogram using the ADPHE algorithm to obtain a target gray-level histogram. Referring to FIG. 4, the gray value with non-zero statistical values may be searched in the source gray-level histogram $H_{src}$, that is, valid gray values are searched. The histogram statistical values corresponding to each valid gray value are extracted to form the valid histogram $H_{valid}$, which may be represented as $H_{valid} = \{h_v(1), h_v(2), \ldots, h_v(L)\}$, where L represents the maximum valid gray value in $H_{valid}$, that is, the number of valid gray values, and $h_v()$ represents the statistical value. Next, the maximum value from $H_{valid}$ is selected to generate a set of maximum $H_{polar}$ values. Define $i \in \{2, 3, \ldots, L-1\}$, if $Hv(i) \geq Hv(i-1)$ and $Hv(i) \geq Hv(i+1)$, then $Hv(i) \in H_{polar}$. After obtaining $H_{polar}$, the double plateau threshold of the histogram is determined based on $H_{polar}$, namely the upper platform threshold and the lower platform threshold. The upper platform threshold $\tau_{up}$ is the arithmetic mean of all elements in $H_{polar}$, which may be calculated according to the following formula (9):

$$\tau_{up} = \text{mean}(H_{polar}) \qquad (9).$$

According to the upper platform threshold $\tau_{up}$, the following formula (10) may be used to calculate the lower platform threshold $\tau_{dn}$:

$$\tau_{dn} = \frac{min\{W \cdot H, \ \tau_{up} \cdot L\}}{K+1} \qquad (10).$$

Afterwards, the upper platform threshold $\tau_{up}$ and the lower platform threshold $t_{dn}$ may be used to adjust the source gray-level histogram $H_{src}$ according to the following formula (11), resulting in $H_{dst} = \{ha(0), h_d(1), \ldots, hd(K)\}$.

$$h_d(k) = \begin{cases} 0, & h_s(k) = 0 \\ \tau_{dn}, & 0 < h_s(k) \leq \tau_{dn} \\ h_s(k), \tau_{dn} < h_s(k) < \tau_{up} \\ \tau_{up}, & h_s(k) \geq \tau_{up} \end{cases} \qquad (11)$$

At step 303, determine a cumulative distribution function of the target gray-level histogram.

The cumulative distribution function $F_d(k)$ of the target gray-level histogram $H_{dst}$ may be determined based on the above formula (5).

At step 304, determine a median gray value, a maximum valid gray value, and a minimum valid gray value based on the source gray-level histogram.

After obtaining the source gray-level histogram $H_{src}$, the cumulative distribution function value of each gray-level in the source gray-level histogram $H_{src}$ may be determined according to the above formula (2). Based on the cumulative distribution function value, m in the formula (3) may be taken as 2 to obtain the following formula (12), and the median gray value $k_{med}$ may be determined according to the formula (12):

$$k_{med} = \min_{k} \left\{ k | F_s(k) \geq \frac{1}{2} \cdot W \cdot H \right\} \qquad (12).$$

Meanwhile, along the direction of the gray-level of the source gray-level histogram $H_{src}$, the first non-zero gray value may be determined as the minimum valid gray value $k_{min}$, and the last non-zero gray value may be determined as the maximum valid gray value $k_{max}$.

At step 305, determine the target mapping gray value corresponding to the median gray value.

After obtaining the median gray value $k_{med}$, the target mapping gray value $y_{ref}$ corresponding to the median gray value is determined according to the above formula (4) using the median gray value $k_{med}$ as the input gray-level segmentation point.

At step 306, determine whether the infrared image to be processed is a small-temperature-difference scene image. If so, proceed to step 307; Otherwise, proceed to step 308.

In an embodiment, if the number of valid gray values of the infrared image to be processed L is less than or equal to $T_{num}$, it is determined that the infrared image to be processed is determined to be a small-temperature-difference scene image, otherwise it is a non-small-temperature-difference scene image.

In an embodiment, if the dynamic range of the infrared image to be processed ($k_{max}$ $k_{min}$) is less than or equal to $T_{range}$, it is determined that the infrared image to be processed is a small-temperature-difference scene image, otherwise it is a non-small-temperature-difference scene image.

In an embodiment, $T_{num}$ is the first threshold and $T_{range}$ is the second threshold, both of which may be determined according to the bit depth N of the image data.

At step 307, determine the output grayscale interval based on the median gray value, the target mapping gray value corresponding to the median gray value, the maximum valid gray value, and the minimum valid gray value.

For example, the minimum output gray value $y_{min}$ and the maximum output gray value $y_{max}$ of the output grayscale interval may be determined based on the above formulas (7) and (8).

At step 308, determine the output grayscale interval as [0, K].

For example, if the infrared image to be processed is a non-small-temperature-difference scene image, it is determined that the minimum output gray value $y_{min}$ is equal to 0 and the maximum output gray value $y_{max}$ is equal to K.

At step 309, segment the input grayscale interval using the median gray value, and segment the output grayscale interval using the target mapping gray value corresponding to the median gray value.

For example, the median gray value $k_{med}$ may be used to segment the input grayscale interval [0, K], resulting in the first input grayscale subinterval [0, $k_{med}$) and the second input grayscale subinterval [$k_{med}$, K]. The target mapping gray value $y_{ref}$ may be used to segment the output grayscale interval [$y_{min}$, $y_{max}$], resulting in the first output grayscale subinterval [$y_{min}$, $y_{ref}$) and the second output grayscale subinterval [$y_{ref}$, $y_{max}$].

At step 310, determine a segmented gray-level mapping curve.

For example, the first input grayscale subinterval [0, $k_{med}$) may be mapped to the first output grayscale subinterval [$y_{min}$, $y_{ref}$], and the second input grayscale subinterval [$k_{med}$, K] may be mapped to the second output grayscale subinterval [$y_{ref}$, $y_{max}$] according to the following formula (13).

$$y(k)=\begin{cases} \dfrac{y_{ref}-y_{min}}{F_d(k_{med})-F_d(0)} \cdot F_d(k)+\dfrac{F_d(k_{med}) \cdot y_{min}-F_d(0) \cdot y_{ref}}{F_d(k_{med})-F_d(0)}, & k \in [0, \ k_{med}) \\[4mm] \dfrac{y_{max}-y_{ref}}{F_d(K)-F_d(k_{med})} \cdot F_d(k)+\dfrac{F_d(k) \cdot y_{ref}-F_d(k_{med}) \cdot y_{max}}{F_d(K)-F_d(k_{med})}, & k \in [k_{med}, \ K] \end{cases} \quad (13)$$

It may be understood that formula (13) is the determined segmented gray-level mapping curve.

At step 311, generate a gray-level mapping lookup table corresponding to the input grayscale interval based on the segmented gray-level mapping curve.

For example, the output gray value corresponding to each of the input gray values in the input grayscale interval [0, K] may be determined based on the segmented gray-level mapping curve shown in formula (13) above, to obtain the gray-level mapping lookup table, which may be represented as y={y(0), y(1), ... , y(K)}.

At step 312, perform gray-level mapping on the infrared image to be processed based on the gray-level mapping lookup table, and obtain a contrast-enhanced image.

For example, if each pixel in the infrared image to be processed is traversed, and the gray value of the pixel in the nth row and jth column in the infrared image to be processed is denoted as $I_{in}(n, j)$, and the target gray value of the pixel in the contrast-enhanced image obtained after gray-level mapping is $I_{out}(n,j)$, then $I_{out}(n, j)$ may be obtained from the gray-level mapping lookup table using the gray-level mapping principle expressed by the following formula (14):

$$I_{out}(n, j)=y(I_{in}(n, j)) \qquad (14),$$

where n∈[1, H], j E [1, W]

In this way, the gray-level mapping lookup table may be used to map the gray values of each pixel in the infrared image to be processed. The contrast-enhanced image of the infrared image to be processed may be obtained based on the mapped target gray value, achieving the effect of image contrast enhancement.

According to the image processing method in an exemplary embodiment of the present application, in a non-small-temperature-difference scenario, the minimum gray value of the input infrared image to be processed is mapped to 0, and the maximum gray value is mapped to K. In a small-temperature-difference scenario, if this mapping rule is still used, it will cause serious background stretching. No matter how the histogram equalization algorithm is adjusted, this phenomenon cannot be avoided. If the contrast enhancement step is directly cancelled by referring to the visible light image processing strategy, all the temperature difference information in the high-precision infrared data will be lost. For example, assuming the bit depth N in the image data of the infrared image to be processed is 14, when applying the determination strategy of the small-temperature-difference scene "$(k_{max}-k_{min}) \leq T_{range}$", the difference between the upper and lower limits of the dynamic range of the infrared image to be processed is 50. When it is reflected in an 8-bit visual image, the difference will be compressed to 0 or 1, and almost all the temperature difference information will be lost. In view of this, during the generation of the gray-level mapping curve, the gray-level mapping range in small-temperature-difference scenes is restricted based on the source gray-level histogram of the infrared image to be processed according to the embodiment of the present application. This may avoid excessive background stretching of the infrared image to be processed, collected in small-temperature-difference scenes, while retaining all the temperature difference information of the high-precision data.

For example, FIG. 5a exemplarily illustrates a schematic diagram of the contrast enhancement effect of a pure road scene using the ADPHE algorithm, and FIG. 5b exemplarily illustrates the contrast enhancement effect of a pure road scene using the image processing method provided by an embodiment of the present application. Referring to FIGS. 5a and 5b, the pure road is an object made of the same material and is a small-temperature-difference scene. When the ADPHE algorithm is used to perform contrast enhancement on pure road scenes, the resulting contrast-enhanced image will be subjected to excessive background stretching. However, when the image processing method provided by the embodiment of the present application is used to perform contrast enhancement on pure road scenes, the resulting contrast-enhanced image effectively avoids excessive background stretching and retains all the temperature difference information of the high-precision data.

According to the image processing method in an exemplary embodiment of the present application, during the generation of the gray-level mapping curve, the input grayscale interval is segmented using the median gray value. The output grayscale interval is segmented using the determined target mapping gray value based on the median gray value and the source gray-level histogram of the infrared image to be processed, and the gray-level mapping curve in segments is generated. For example, the first valid gray value exceeding 50% in the cumulative distribution of the source gray-level histogram $H_{src}$ is taken as the median gray value $k_{med}$, and $k_{med}$ is used to segment the input grayscale interval into a first input grayscale subinterval $[0, k_{med})$ and a second input grayscale subinterval $[k_{med}, K]$. The target mapping gray value $y_{ref}$ corresponding to $k_{med}$ is determined based on the median gray value $k_{med}$ and the cumulative distribution of the source gray-level histogram $H_{src}$. The output grayscale interval is segmented into a first output grayscale subinterval $[y_{min}, y_{ref})$ and a second output grayscale subinterval $[y_{ref}, y_{max}]$ using $y_{ref}$ as the segmentation point. Then, the first input grayscale subinterval $[0, k_{med})$ is mapped to the first output grayscale subinterval $[y_{min}, y_{ref}]$, and the second input grayscale subinterval $[k_{med}, K]$ is mapped to the second output grayscale subinterval $[y_{ref}, y_{max}]$ based on the linear correlation between the output grayscale and the cumulative distribution function Fd(k) of the target gray-level histogram $H_{dst}$.

As mentioned previously, when using the target gray-level histogram adjusted by the HE algorithm to generate the gray-level mapping curve, the HE algorithm introduces histogram distortion, which easily causes brightness fluctuations in the enhanced image when contrast enhancement is performed using the gray-level mapping curve generated by the target gray-level histogram. In view of this, according to the image processing method provided in an embodiment of the present application, the original statistical information in the source gray-level histogram $H_{src}$ of the infrared image to be processed, namely the median gray value $k_{med}$ and the target mapping gray value $y_{ref}$ determined based on the cumulative distribution $F_s(k)$ of $k_{med}$ and $H_{src}$, is used to restrict the mapping range of the gray-level mapping curve. That is, by using the real gray-level distribution information reflected in the source gray-level histogram of the infrared image to be processed, the gray-level mapping range of the target gray-level histogram distorted by the statistical information is constrained, thereby achieving the purpose of restricting the brightness fluctuation of the contrast-enhanced image.

It may be understood that the median gray value is used to segment the input grayscale interval (domain), so that the number of pixels falling into the first input grayscale subinterval $[0, k_{med})$ and the second input grayscale subinterval $[k_{med}, K]$ is equal to or approximately equal to. The target mapping gray value $y_{ref}$ calculated based on the cumulative distribution of the median gray value $k_{med}$ and the source gray-level histogram $H_{src}$ is around K/2. The segmented gray-level mapping curve designed based on this may ensure that half of the pixels have gray values less than $y_{ref}$ and half of the pixels have gray values greater than $y_{ref}$ after gray-level mapping. The phenomenon of "half of the pixels occupying half of the gray value range" reproduces the design idea of gray-level reconstruction based on the positions where the gray values are sorted in ascending order.

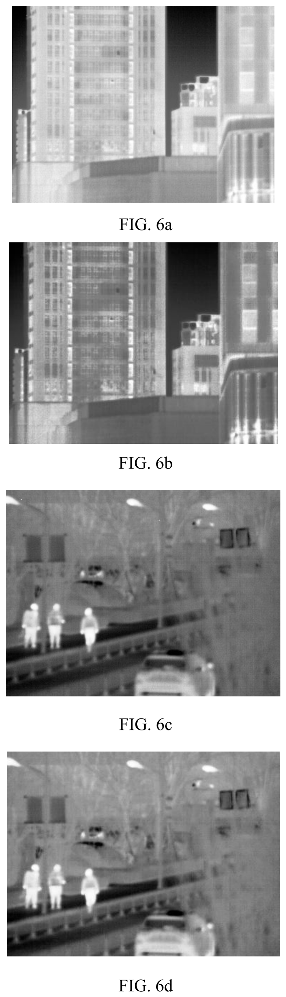

According to the image processing method in an exemplary embodiment of the present application, a PTZ camera may be used to capture infrared images in a building complex, and the contrast enhancement results of the infrared images may be visualized and output in 8-bit format. Taking the ADPHE algorithm as an example, the image processing method of the present application is experimentally compared with the ADPHE algorithm in a large-area high-temperature target scene (grayscale distribution is left-biased) and a large-area low-temperature background scene (grayscale distribution is right-biased). FIG. 6a illustrates a schematic diagram illustrating the contrast enhancement effect of a large-area high-temperature target scene using the ADPHE algorithm, while FIG. 6b illustrates a schematic diagram illustrating the contrast enhancement effect of a large-area high-temperature target scene using the image processing method provided by the present application. Referring to FIGS. 6a and 6b, when using the ADPHE algorithm for contrast enhancement, the average brightness of the resulting contrast-enhanced image is 174.8. However, when using the image processing method provided by the present application for contrast enhancement, the average brightness of the resulting contrast-enhanced image is 129.3.

FIG. 6c exemplarily illustrates a schematic diagram illustrating the contrast enhancement effect of a large-area low-temperature background scene using the ADPHE algorithm, and FIG. 6d exemplarily illustrates a schematic diagram illustrating the contrast enhancement effect of a large-area low-temperature background scene using the image processing method provided by the present application. Referring to FIGS. 6c and 6d, when using the ADPHE algorithm for contrast enhancement, the average brightness of the resulting contrast-enhanced image is 109.1. However, when using the image processing method provided by the present application for contrast enhancement, the average brightness of the resulting contrast-enhanced image is 124. 0.

In conjunction with FIGS. 6a to 6d, when using the ADPHE algorithm for contrast enhancement, the fluctuation of the average brightness of the resulting contrast-enhanced image is between 109.1 and 174.8. However, when using the image processing method provided by the present application for contrast enhancement, the fluctuation of the average brightness of the resulting contrast-enhanced image is between 124.0 and 129.3. No matter how the scene changes, the average brightness of the resulting contrast-enhanced image is relatively stable. Compared with the ADPHE algorithm, it provides reliable brightness stability, which helps to improve the temporal continuity of infrared video images and provides a good visual effect.

According to the image processing method in an exemplary embodiment of the present application, on the one hand, during the generation of the gray-level mapping curve, the gray-level mapping range of small-temperature-difference scenes is restricted based on the source gray-level histogram of the infrared image to be processed, thereby avoiding excessive contrast stretching while preserving temperature difference information. On the other hand, during the generation of the gray-level mapping curve, the source gray-level histogram and the corresponding cumulative distribution of the infrared image to be processed are used to determine the median gray value and the corresponding target mapping gray value. Then, the median gray value is used to segment the input grayscale interval (domain), and the target mapping gray value is used to segment the output grayscale interval (range), generating the gray-level mapping curve in segments. The histogram distortion introduced in the histogram equalization process is suppressed through segmented mapping, thereby suppressing the brightness fluctuation of the contrast-enhanced image caused by histogram distortion. This helps to improve the temporal continuity of infrared video images and provides a good visual effect.

The image processing device provided in the present application is described below, and the image processing device described below may be referred to in correspondence with the image processing method described above.

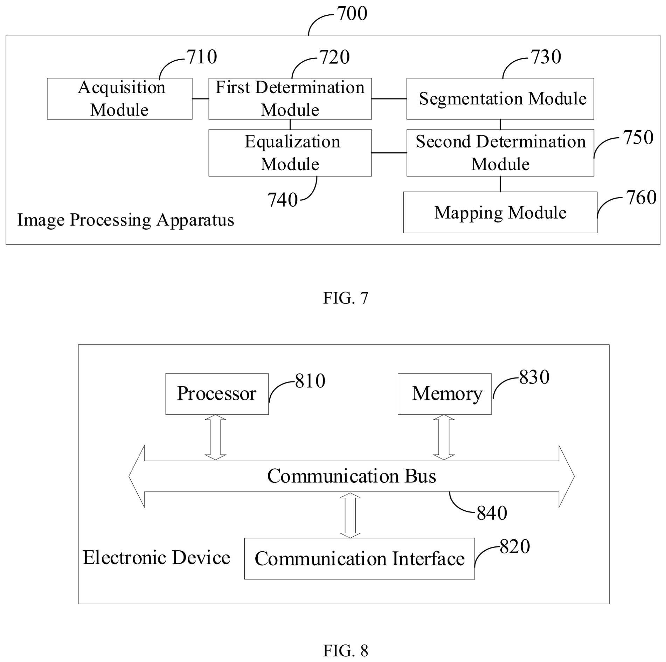

FIG. 7 exemplarily illustrates a schematic structural diagram of an image processing apparatus according to an embodiment of the present application. Referring to FIG. 7, the image processing apparatus 700 may include: an acquisition module 710 configured to acquire an infrared image to be processed; a first determination module 720 configured to determine a source gray-level histogram of the infrared image to be processed; a segmentation module 730 configured to segment an input grayscale interval and an output grayscale interval of gray-level mapping based on the source gray-level histogram, and obtain at least two input grayscale subintervals and an output grayscale subinterval corresponding to each of the input grayscale subintervals; an equalization module 740 configured to perform histogram equalization on the source gray-level histogram and obtain a target gray-level histogram; a second determination module 750 configured to determine a mapping relationship between each of the input grayscale subintervals and the corresponding output grayscale subinterval based on the target gray-level histogram, and obtain a segmented gray-level mapping curve; and a mapping module 760 configured to perform gray-level mapping on the infrared image to be processed based on the segmented gray-level mapping curve, and obtain a contrast-enhanced image of the infrared image to be processed.

In an exemplary embodiment, the segmentation module 730 may include: a first determination unit configured to determine at least one input gray-level segmentation point and a target mapping gray value corresponding to each of the input gray-level segmentation points based on the source gray-level histogram; a first segmentation unit configured to segment the input grayscale interval based on the input gray-level segmentation point, and obtain at least two input grayscale subintervals; a second segmentation unit configured to segment the output grayscale interval based on the target mapping gray value, and obtain the output grayscale subinterval corresponding to each of the input grayscale subintervals.

In an exemplary embodiment, the first determination unit may be configured to: determine the cumulative distribution function value of each gray-level in the source gray-level histogram; determine at least one input gray-level segmentation point based on the cumulative distribution function value and the resolution of the infrared image to be processed; and for each of the input gray-level segmentation points, determine the target mapping gray value corresponding to each of the input gray-level segmentation points based on the cumulative distribution function value of the gray-level where each of the input gray-level segmentation points is located and the maximum gray value of the source gray-level histogram.

In an exemplary embodiment, the image processing device 700 may further include a third determination module configured to determine the output grayscale interval based on the median gray value, the target mapping gray value corresponding to the median gray value, a maximum valid gray value, and a minimum valid gray value in a case where the infrared image to be processed is a small-temperature-difference scene image; in which the valid gray value is a gray value with a statistical value greater than 0 in the source gray-level histogram.

In an exemplary embodiment, the third determination module may also be configured to determine that the infrared image to be processed is a small-temperature-difference scene image in a case where a number of valid gray values in the source gray-level histogram is less than or equal to a first threshold, or in a case where a grayscale dynamic range of the infrared image to be processed is less than or equal to a second threshold; in which the grayscale dynamic range is determined based on the maximum valid gray value and the minimum valid gray value.

In an exemplary embodiment, the second determination module 750 may include: a second determination unit configured to determine the cumulative distribution function of the target gray-level histogram; a third determination unit configured to determine the mapping relationship between the input grayscale subinterval and the output grayscale subinterval based on a first interval endpoint of each of the input grayscale subintervals, a second interval endpoint of the corresponding output grayscale subinterval, and the cumulative distribution function of the target gray-level histogram, to obtain the segmented gray-level mapping curve for each of the input grayscale subintervals and the output grayscale subinterval corresponding to each of the input grayscale subintervals.

In an exemplary embodiment, the mapping module 760 may include: a generation unit configured to generate a gray-level mapping lookup table corresponding to the input grayscale interval based on the segmented gray-level mapping curve; an acquisition unit configured to acquire the target gray value corresponding to the gray value of each pixel from the gray-level mapping lookup table based on the gray value of each pixel in the infrared image to be processed; a generation unit configured to generate a contrast-enhanced image based on the target gray value.

FIG. 8 shows a schematic structural diagram of an electronic device. As shown in FIG. 8, the electronic device may include a processor 810, a communication interface 820, a memory 830, and a communication bus 840. The processor 810, the communication interface 820, and the memory 830 may communicate with each other through the communication bus 840. The processor 810 may call the logical instructions in the memory 830 to execute the image processing method provided by each of the above methods. The method may include, for example, acquiring an infrared image to be processed and determining a source gray-level histogram of the infrared image to be processed; segmenting an input grayscale interval and an output grayscale interval of gray-level mapping based on the source gray-level histogram, to obtain at least two input grayscale subintervals and an output grayscale subinterval corresponding to each of the input grayscale subintervals; performing histogram equalization on the source gray-level histogram to obtain a target gray-level histogram, determining a mapping relationship between each of the input grayscale subintervals and the corresponding output grayscale subinterval based on the target gray-level histogram to obtain a segmented gray-level mapping curve; and performing gray-level mapping on the infrared image to be processed based on the segmented gray-level mapping curve, to obtain a contrast-enhanced image of the infrared image to be processed.

For example, the electronic device may be a thermal infrared camera, or an electronic device such as a server, a mobile phone, or a computer that is in communication with a thermal infrared camera.

In addition, when the logical instructions in the aforementioned memory 830 are implemented in the form of a software functional unit, and sold or used as an independent product, it may be stored in a processor-readable storage medium. Based on this understanding, the solution of the present application, or the part that contributes to the related art, or all or part of the solution, may be embodied in the form of a software product. The computer software product is stored in a storage medium and includes several instructions allowing a computer device (which may be a personal computer, a server, or a network device, and the like) to execute all or part of the steps of the method described in each embodiment of the present application. The aforementioned storage medium includes a USB flash drive, a mobile hard disk, a read-only memory (ROM), a random-access memory (RAM), a disk or optical disk, and other media that may store program codes.

On the other hand, the present application also provides a computer program product including a computer program that may be stored in a non-transitory computer-readable storage medium. The computer may perform the image processing method provided by each of the above methods when the computer program is executed by a processor. The method may include, for example, acquiring an infrared image to be processed and determining a source gray-level histogram of the infrared image to be processed; segmenting an input grayscale interval and an output grayscale interval of gray-level mapping based on the source gray-level histogram, to obtain at least two input grayscale subintervals and an output grayscale subinterval corresponding to each of the input grayscale subintervals; performing histogram equalization on the source gray-level histogram to obtain a target gray-level histogram, determining a mapping relationship between each of the input grayscale subintervals and the corresponding output grayscale subinterval based on the target gray-level histogram to obtain a segmented gray-level mapping curve; and performing gray-level mapping on the infrared image to be processed based on the segmented gray-level mapping curve, to obtain a contrast-enhanced image of the infrared image to be processed.

On the other hand, the present application also provides a non-transitory computer-readable storage medium on which a computer program is stored. When the computer program is executed by a processor, it implements and performs the image processing method provided by each of the above methods. The method may include, for example, acquiring an infrared image to be processed and determining a source gray-level histogram of the infrared image to be processed; segmenting an input grayscale interval and an output grayscale interval of gray-level mapping based on the source gray-level histogram to obtain at least two input grayscale subintervals, to obtain at least two input grayscale subintervals and an output grayscale subinterval corresponding to each of the input grayscale subintervals; performing histogram equalization on the source gray-level histogram to obtain a target gray-level histogram, determining a mapping relationship between each of the input grayscale subintervals and the corresponding output grayscale subinterval based on the target gray-level histogram to obtain a segmented gray-level mapping curve; and performing gray-level mapping on the infrared image to be processed based on the segmented gray-level mapping curve, to obtain a contrast-enhanced image of the infrared image to be processed.

The apparatus in the embodiment described above is merely illustrative. A unit described as a separate component may or may not be physically separate, and a component shown as a unit may or may not be a physical unit. That is, they may be located in one location or distributed across multiple network units. Some or all of these modules may be selected depending on actual needs to achieve the purpose of the embodiment according to the present application. Those skilled in the art may understand and implement the present invention without creative effort.

Through the description of the above embodiments, those skilled in the art may clearly understand that each embodiment may be implemented by means of software plus a necessary general hardware platform, or, of course, hardware. Based on this understanding, the above solution, or the part that contributes to the related art, may be embodied in the form of a software product. The computer software product may be stored in a non-transitory computer-readable storage medium, such as ROM/RAM, a disk, optical disk, and the like, and includes several instructions allowing a computer device (which may be a personal computer, a server, or a network device, and the like) to implement the methods of each embodiment or certain parts of the embodiment.

Finally, it should be noted that the above embodiments are only used to illustrate the solutions of the present application, but are not limited thereto. Although the present application has been described in detail with reference to the aforementioned embodiments, those skilled in the art should understand that they may still modify the solutions described in each of the aforementioned embodiments, or replace some of the technical features therein with equivalents. However, these modifications or replacements do not deviate from the essence of the corresponding solutions from the spirit and scope of the solutions of each embodiment of the present application.

## Claims

1. An image processing method comprising:

   acquiring an infrared image to be processed and determining a source gray-level histogram of the infrared image to be processed;
   segmenting an input grayscale interval and an output grayscale interval of gray-level mapping based on the source gray-level histogram, to obtain at least two input grayscale subintervals and an output grayscale subinterval corresponding to each of the input grayscale subintervals;
   performing histogram equalization on the source gray-level histogram to obtain a target gray-level histogram, and determining a mapping relationship between each of the input grayscale subintervals and the corresponding output grayscale subinterval based on the target gray-level histogram, to obtain a segmented gray-level mapping curve; and
   performing gray-level mapping on the infrared image to be processed based on the segmented gray-level mapping curve, to obtain a contrast-enhanced image of the infrared image to be processed.

2. The image processing method of claim 1, wherein segmenting the input grayscale interval and the output grayscale interval of the gray-level mapping based on the source gray-level histogram, to obtain the at least two input grayscale subintervals and the output grayscale subinterval corresponding to each of the input grayscale subintervals comprises:

   determining at least one input gray-level segmentation point and a target mapping gray value corresponding to each of the input gray-level segmentation points based on the source gray-level histogram;
   segmenting the input grayscale interval based on the input gray-level segmentation point to obtain at least two input grayscale subintervals; and
   segmenting the output grayscale interval based on the target mapping gray value to obtain the output grayscale subinterval corresponding to each of the input grayscale subintervals.

3. The image processing method of claim 2, wherein determining the at least one input gray-level segmentation point and the target mapping gray value corresponding to each of the input gray-level segmentation points based on the source gray-level histogram comprises:

determining a cumulative distribution function value of each gray-level in the source gray-level histogram;

determining at least one input gray-level segmentation point based on the cumulative distribution function value and a resolution of the infrared image to be processed; and

for each of the input gray-level segmentation points, determining the target mapping gray value corresponding to each of the input gray-level segmentation points based on the cumulative distribution function value of the gray-level where each of the input gray-level segmentation points is located, and a maximum gray value of the source gray-level histogram.

4. The image processing method of claim 2, wherein the at least one input gray-level segmentation point comprises a median gray value; and the method further comprises:

determining the output grayscale interval based on the median gray value, the target mapping gray value corresponding to the median gray value, a maximum valid gray value, and a minimum valid gray value in a case where the infrared image to be processed is a small-temperature-difference scene image;

wherein the valid gray value is a gray value with a statistical value greater than 0 in the source gray-level histogram.

5. The image processing method of claim 4, wherein determining the output grayscale interval based on the median gray value, the target mapping gray value corresponding to the median gray value, the maximum valid gray value, and the minimum valid gray value comprises:

determining a minimum value of the output grayscale interval based on the median gray value, the target mapping gray value corresponding to the median gray value, and the minimum valid gray value;

determining a maximum value of the output grayscale interval based on the median gray value, the target mapping gray value corresponding to the median gray value, and the maximum valid gray value; and

determining the output grayscale interval based on the minimum value of the output grayscale interval and the maximum value of the output grayscale interval.

6. The image processing method of claim 4, further comprising:

determining that the infrared image to be processed is a small-temperature-difference scene image in a case where a number of valid gray values in the source gray-level histogram is less than or equal to a first threshold, or in a case where a grayscale dynamic range of the infrared image to be processed is less than or equal to a second threshold;

wherein, the grayscale dynamic range is determined based on the maximum valid gray value and the minimum valid gray value.

7. The image processing method of any of claims 1 to 6, wherein determining the mapping relationship between each of the input grayscale subintervals and the corresponding output grayscale subinterval based on the target gray-level histogram, to obtain the segmented gray-level mapping curve comprises:

determining a cumulative distribution function of the target gray-level histogram; and

for each of the input grayscale subintervals and the output grayscale subinterval corresponding to each of the input grayscale subintervals, determining the mapping relationship between the input grayscale subinterval and the output grayscale subinterval based on a first interval endpoint of each of the input grayscale subintervals, a second interval endpoint of the corresponding output grayscale subinterval, and the cumulative distribution function of the target gray-level histogram, to obtain the segmented gray-level mapping curve.

8. The image processing method of any of claims 1 to 6, wherein performing the gray-level mapping on the infrared image to be processed based on the segmented gray-level mapping curve, to obtain the contrast-enhanced image of the infrared image to be processed comprises:

generating a gray-level mapping lookup table corresponding to the input grayscale interval based on the segmented gray-level mapping curve;

obtaining a target gray value corresponding to the gray value of each pixel from the gray-level mapping lookup table based on the gray value of each pixel in the infrared image to be processed; and

generating the contrast-enhanced image based on the target gray value.

9. An image processing apparatus comprising:

an acquisition module, configured to acquire an infrared image to be processed;
a first determination module, configured to determine a source gray-level histogram of the infrared image to be processed;
a segmentation module, configured to segment an input grayscale interval and an output grayscale interval of gray-level mapping based on the source gray-level histogram, to obtain at least two input grayscale subintervals and an output grayscale subinterval corresponding to each of the input grayscale subintervals;
an equalization module, configured to perform histogram equalization on the source gray-level histogram to obtain a target gray-level histogram;
a second determination module, configured to determine a mapping relationship between each of the input grayscale subintervals and the corresponding output grayscale subinterval based on the target gray-level histogram, to obtain a segmented gray-level mapping curve; and
a mapping module, configured to perform gray-level mapping on the infrared image to be processed based on the segmented gray-level mapping curve, to obtain a contrast-enhanced image of the infrared image to be processed.

10. An electronic device comprising a memory, a processor, and a computer program stored in the memory and executable in the processor, wherein the processor implements the image processing method of any of claims 1 to 8 when executing the computer program.

11. A non-transitory computer-readable storage medium storing a computer program, wherein the computer program implements the image processing method of any of claims 1 to 8 when executed by a processor.

| Acquire an infrared image to be processed and determine a source gray-level histogram of the infrared image to be processed | ⌐110 |

↓

| Segment an input grayscale interval and an output grayscale interval of gray-level mapping based on the source gray-level histogram, to obtain at least two input grayscale subintervals and an output grayscale subinterval corresponding to each of the input grayscale subintervals | ⌐120 |

↓

| Perform histogram equalization on the source gray-level histogram to obtain the target gray-level histogram | ⌐130 |

↓

| Determine a mapping relationship between each of the input grayscale subintervals and the corresponding output grayscale subinterval based on the target gray-level histogram, to obtain a segmented gray-level mapping curve | ⌐140 |

↓

| Perform gray-level mapping on the infrared image to be processed based on the segmented gray-level mapping curve, to obtain a contrast-enhanced image of the infrared image to be processed | ⌐150 |

FIG. 1

Mapping interval segmentation

$I_{in}$ → | Gray-level distribution statistics | → | Gray-level distribution adjustment | → | Mapping curve generation | → | Gray-level mapping | → $I_{out}$

FIG. 2

Acquire an infrared image to be processed, and determine a source gray-level histogram of the infrared image to be processed — 301

Perform histogram equalization on the source gray-level histogram to obtain the target gray-level histogram — 302

Determine a median gray value, a maximum valid gray value, and a minimum valid gray value based on the source gray-level histogram — 304

Determine the target mapping gray value corresponding to the median gray value — 305

Determine a cumulative distribution function of the target gray-level histogram — 303

Determine whether the infrared image to be processed is a small-temperature-difference scene image — 306

no

yes

Determine the output grayscale interval as [0, K] — 308

Determine the output grayscale interval based on the median gray value, the target mapping gray value corresponding to the median gray value, the maximum valid gray value, and the minimum valid gray value — 307

Segment the input grayscale interval using the median gray value, and segment the output grayscale interval using the target mapping gray value corresponding to the median gray value — 309

Determine a segmented gray-level mapping curve — 310

Generate a gray-level mapping lookup table corresponding to the input grayscale interval based on the segmented gray-level mapping curve — 311

Perform gray-level mapping on the infrared image to be processed based on the gray-level mapping lookup table, to obtain a contrast-enhanced image — 312

FIG. 3

EP 4 693 172 A1

Generate a source gray-level histogram $H_{src}$ by gray-level statistics

↓

Count a valid gray value and generate a valid histogram $H_{valid}$

↓

Search for a maximum value of the valid histogram $H_{valid}$, and calculate a double plateau threshold

↓

Adjust the source gray-level histogram $H_{src}$ using the double plateau threshold, and generate a target gray-level histogram $H_{dst}$

FIG. 4

FIG. 5a

FIG. 5b

20

FIG. 6a

FIG. 6b

FIG. 6c

FIG. 6d

700

| | | |
|---|---|---|
| Acquisition Module 710 | First Determination Module 720 | Segmentation Module 730 |
| | Equalization Module 740 | Second Determination Module 750 |
| | | Mapping Module 760 |

Image Processing Apparatus

FIG. 7

Processor 810    Memory 830

Communication Bus 840

Electronic Device    Communication Interface 820

FIG. 8

## INTERNATIONAL SEARCH REPORT

| International application No. |
| --- |
| **PCT/CN2023/143354** |

### A. CLASSIFICATION OF SUBJECT MATTER

G06T7/00(2017.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, IEEE: 图像, 对比度, 增强, 灰度, 映射, 变换, 直方图, 均衡, 线性, 分段, 区间, 红外, 累积分布, 输入, 输出, image, contrast, enhancement, histogram, equalization, AHE, CLAHE, ADPHE, CDF, input, output, segment

### C. DOCUMENTS CONSIDERED TO BE RELEVANT

| Category* | Citation of document, with indication, where appropriate, of the relevant passages | Relevant to claim No. |
| --- | --- | --- |
| A | CN 109961409 A (PING AN TECHNOLOGY (SHENZHEN) CO., LTD.) 02 July 2019 (2019-07-02)<br>description, paragraphs 0060-0102 | 1-11 |
| A | CN 107945122 A (WUHAN UNIVERSITY) 20 April 2018 (2018-04-20)<br>entire document | 1-11 |
| A | CN 109801244 A (GUANGZHOU SHIYUAN ELECTRONICS CO., LTD.) 24 May 2019 (2019-05-24)<br>entire document | 1-11 |
| A | CN 114998163 A (XI'AN INSTITUTE OF OPTICS AND PRECISION MECHANICS, CHINESE ACADEMY OF SCIENCES) 02 September 2022 (2022-09-02)<br>entire document | 1-11 |
| A | CN 115375592 A (GUANGDONG OPPO MOBILE COMMUNICATIONS CO., LTD.) 22 November 2022 (2022-11-22)<br>entire document | 1-11 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 March 2024** | **27 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/143354** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2021189222 A1 (HUAWEI TECHNOLOGIES CO., LTD.) 30 September 2021 (2021-09-30)<br>    entire document | 1-11 |

Form PCT/ISA/210 (second sheet) (July 2022)

**INTERNATIONAL SEARCH REPORT**
Information on patent family members

International application No.

**PCT/CN2023/143354**

| Patent document cited in search report | | | Publication date (day/month/year) | Patent family member(s) | | | Publication date (day/month/year) |
|---|---|---|---|---|---|---|---|
| CN | 109961409 | A | 02 July 2019 | WO | 2020173141 | A1 | 03 September 2020 |
| CN | 107945122 | A | 20 April 2018 | None | | | |
| CN | 109801244 | A | 24 May 2019 | None | | | |
| CN | 114998163 | A | 02 September 2022 | None | | | |
| CN | 115375592 | A | 22 November 2022 | None | | | |
| WO | 2021189222 | A1 | 30 September 2021 | CN | 115298688 | A | 04 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310324018